# EUROPEAN PATENT APPLICATION

(11) **EP 3 910 397 A1**
(43) Date of publication of application: **17.11.2021**
(21) Application number: 19913159.0
(22) Date of filing: 30.01.2019
(51) Int. Cl.: G02B 13/00, G02B 13/18, G02B 13/22

(54) **IMAGING LENS, IMAGING APPARATUS AND ELECTRONIC DEVICE**

(71) Applicant: SZ DJI Technology Co., Ltd., Shenzhen, Guangdong 518057 (CN)
(72) Inventor: MAO, Qing, Shenzhen, Guangdong 518057 (CN)
(74) Representative: Appelt, Christian W.
(86) International application number: PCT/CN2019/073881
(87) International publication number: WO 2020/154944

(57) **Abstract**

An imaging lens, an imaging apparatus, and an electronic device. The imaging lens includes a first lens group (10), an aperture (30), and a second lens group (20) in sequence from an object side to an image side. The first lens group (10) includes a first lens (11) and a second lens (12) in sequence from the object side to the image side. The second lens group (20) includes a third lens (21), a fourth lens (22), a fifth lens (23), and a sixth lens (24) in sequence from the object side to the image side. An effective focal length of the imaging lens is f, a distance from an object-side surface of the first lens (11) to the image plane (40) of the imaging lens on an optical axis is a total track length (TTL), an entrance pupil diameter of the imaging lens is EPD. The imaging lens satisfies 0.56<f/TTL<0.67, and f/EPD≤2.0. By cooperation between the lenses, the requirements of lens miniaturization and a large aperture are achieved.

## Description

### TECHNICAL FIELD

The present disclosure relates to the field of optical imaging technologies and, more particularly, to an imaging lens, an imaging apparatus, and an electronic device.

### BACKGROUND

In recent years, with the development of science and technology, portable electronic products have gradually emerged, and miniaturized camera lens products with high pixel count and large aperture have become favorable to more people.

To meet the requirements of miniaturization, lenses on the current market are usually equipped with fixed apertures to achieve miniaturization and good optical performance. With the continuous development of intelligent electronic products, higher requirements are put forward for imaging lenses. Especially, different environments and different scenes have different requirements for a depth of field of lenses. As the size of photosensitive components increases, this type of fixed aperture cannot meet the needs of users.

### SUMMARY

The present disclosure provides a miniaturized and portable imaging lens, an imaging apparatus, and an electronic device.

In detail, the present disclosure is achieved by following technical solutions.

One aspect of the present disclosure provides an imaging lens. The imaging lens includes a first lens group and a second lens group in sequence from an object side to an image side. An aperture is provided between the first lens group and the second lens group. The first lens group includes a first lens and a second lens in sequence from the object side to the image side. The second lens group includes a third lens, a fourth lens, a fifth lens, and a sixth lens in sequence from the object side to the image side. An object-side surface of the fifth lens is concave and an image-side surface of the fifth lens is convex. Each of the object-side surface and the image-side surface of the fifth lens has at least one inflection point. An object-side surface of the sixth lens is convex and an image-side surface of the sixth lens is concave. Each of the object-side surface and the image-side surface of the sixth lens has at least one inflection point. An effective focal length of the imaging lens is f, a distance from an object-side surface of the first lens to the image plane of the imaging lens on an optical axis is a total track length (TTL), an entrance pupil diameter of the imaging lens is EPD. The imaging lens satisfies: 0.56<f/TTL<0.67, and f/EPD≤2.0.

Another aspect of the present disclosure provides an imaging apparatus. The imaging apparatus includes an imaging lens and an electronic photosensitive element on an image plane of the imaging lens. The imaging lens includes a first lens group and a second lens group in sequence from an object side to an image side. An aperture is provided between the first lens group and the second lens group. The first lens group includes a first lens and a second lens in sequence from the object side to the image side. The second lens group includes a third lens, a fourth lens, a fifth lens, and a sixth lens in sequence from the object side to the image side. An object-side surface of the fifth lens is concave and an image-side surface of the fifth lens is convex. Each of the object-side surface and the image-side surface of the fifth lens has at least one inflection point. An object-side surface of the sixth lens is convex and an image-side surface of the sixth lens is concave. Each of the object-side surface and the image-side surface of the sixth lens has at least one inflection point. An effective focal length of the imaging lens is f, a distance from an object-side surface of the first lens to the image plane of the imaging lens on an optical axis is a total track length (TTL), an entrance pupil diameter of the imaging lens is EPD. The imaging lens satisfies 0.56<f/TTL<0.67, and f/EPD≤2.0.

Another aspect of the present disclosure provides an electronic device. The electronic device includes a device body and an imaging apparatus disposed at the device body. The imaging apparatus includes an imaging lens and an electronic photosensitive element on an image plane of the imaging lens. The imaging lens includes a first lens group and a second lens group in sequence from an object side to an image side. An aperture is provided between the first lens group and the second lens group. The first lens group includes a first lens and a second lens in sequence from the object side to the image side. The second lens group includes a third lens, a fourth lens, a fifth lens, and a sixth lens in sequence from the object side to the image side. An object-side surface of the fifth lens is concave and an image-side surface of the fifth lens is convex. Each of the object-side surface and the image-side surface of the fifth lens has at least one inflection point. An object-side surface of the sixth lens is convex and an image-side surface of the sixth lens is concave. Each of the object-side surface and the image-side surface of the sixth lens has at least one inflection point. An effective focal length of the imaging lens is f, a distance from an object-side surface of the first lens to the image plane of the imaging lens on an optical axis is a total track length (TTL), an entrance pupil diameter of the imaging lens is EPD. The imaging lens satisfies 0.56<f/TTL<0.67, and f/EPD≤2.0.

It can be seen from the above technical solutions that in the imaging lens of the present disclosure, through the cooperation between the lenses, at least one inflection point may be provided on each of the object-side surfaces and the image-side surfaces of the fifth lens and the sixth lens. Correspondingly, the residual between the fifth and the sixth lens may be reduced and the total track length may be shortened, to facilitate the miniaturization of the imaging lens. Further, ghost images may be suppressed effectively, thereby meeting the needs of miniaturization and large apertures of the lens.

### BRIEF DESCRIPTION OF THE DRAWINGS

In order to explain the technical solutions of the embodiments of the present disclosure more clearly, the following will briefly introduce the drawings that need to be used in the description of the embodiments or the prior art. Obviously, the drawings in the following description are only some of the embodiments of the present disclosure. For those of ordinary skill in the art, without creative work, other drawings can be obtained from these drawings.
FIG. 1 is a schematic structural diagram of an imaging lens consistent with an embodiment of the present disclosure.
FIG. 2 is a schematic optical diagram of an imaging lens consistent with an embodiment of the present disclosure.
FIG. 3 shows an exemplary data table of various surfaces of an imaging lens consistent with an embodiment of the present disclosure.
FIG. 4 shows tables of focal length and capacity distribution of various lenses of an imaging lens consistent with an embodiment of the present disclosure.
FIG. 5 shows a table of aspheric data of an imaging lens consistent with an embodiment of the present disclosure.
FIG. 6 is a diagram showing position chromatic aberration distribution of an imaging lens consistent with an embodiment of the present disclosure.
FIG. 7 is a diagram showing curvature and distortion of an image surface of an imaging lens consistent with an embodiment of the present disclosure.
FIG. 8 is a diagram showing relative illuminance distribution of an imaging lens consistent with an embodiment of the present disclosure.
FIG. 9 is a diagram showing magnification chromatic aberration distribution map of an imaging lens consistent with an embodiment of the present disclosure.

### DETAILED DESCRIPTION OF THE EMBODIMENTS

Technical solutions in the embodiments of the present disclosure will be described below clearly and completely with reference to the accompanying drawings in the embodiments of the present disclosure. Obviously, the described embodiments are not all the embodiments, but only some of the embodiments of the present disclosure. Based on the embodiments of the present disclosure, all other embodiments obtained by those of ordinary skill in the art without creative work shall fall within the scope of the present disclosure.

The present disclosure provides a miniaturized and portable imaging lens, an imaging apparatus, and an electronic device. The imaging lens, imaging device, and electronic device of the present disclosure will be described in detail below with reference to the accompanying drawings. In the case of no conflict, the following embodiments and features in the implementation can be combined with each other.

An embodiment of the present disclosure provides an imaging lens. The imaging lens may include a first lens group and a second lens group in sequence from an object side to an image side. An aperture may be provided between the first lens group and the second lens group. For example, the aperture can be set as a variable aperture or a fixed aperture.

The first lens group may include a first lens and a second lens in sequence from the object side to the image side.

The second lens group may include a third lens, a fourth lens, a fifth lens, and a sixth lens in sequence from the object side to the image side. An object side (a side close to the object to be photographed, a left side shown in the figure) surface of the fifth lens may be concave and an image side (a side close to the image plane used to image the object to be photographed, a right side in the figure) surface of the fifth lens may be a convex surface. Each of the object-side surface and the image-side surface of the fifth lens may have at least one inflection point. An object-side surface of the sixth lens may be convex and an image-side surface of the sixth lens may be concave. Each of the object-side surface and the image-side surface of the sixth lens may have at least one inflection point.

An effective focal length of the imaging lens may be f, and a distance from an object-side surface of the first lens to the image plane of the imaging lens on the optical axis may be a total track length (TTL). An entrance pupil diameter of the imaging lens may be EPD. The imaging lens may satisfy the following conditions: 0.56<f/TTL<0.67, and f/EPD≤2.0.

It can be seen from the above technical solutions that in the imaging lens of the present disclosure, through the cooperation between the lenses, at least one inflection point may be provided on each of the object-side surfaces and the image-side surfaces of the fifth lens and the sixth lens. Correspondingly, the residual between the fifth and the sixth lens may be reduced and the total track length may be shortened, to facilitate the miniaturization of the imaging lens. Further, ghost images may be suppressed effectively, thereby meeting the needs of miniaturization and large aperture of lenses.

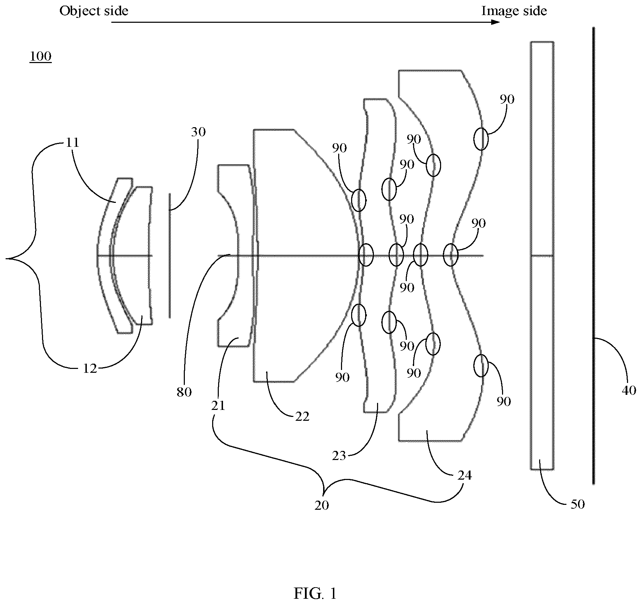

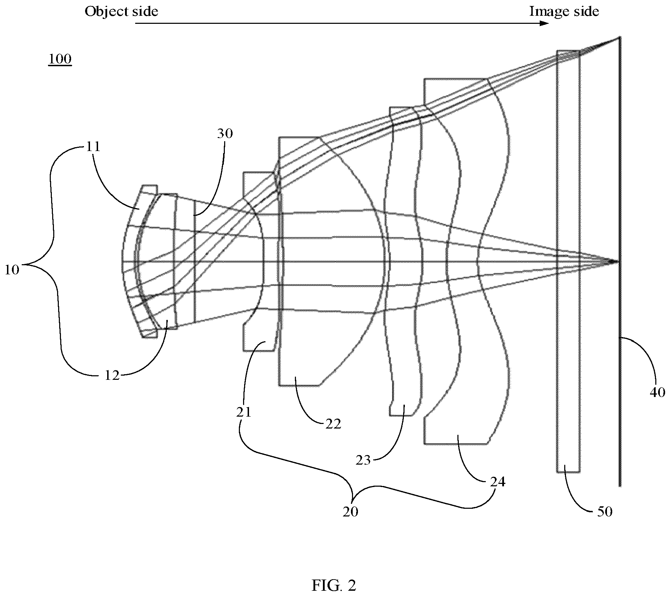

As illustrated in FIG. 1 and FIG. 2, one embodiment of the present disclosure provides an imaging lens 100. From an object side (which can be understood as a side of an object to be photographed, a left side in the figure) to an image side (which can be understood as a side of an image plane used to image the object to be photographed, a right side in the figure), the imaging lens 100 includes a first lens group 10 and a second lens group 20 in sequence. An aperture 30 is provided between the first lens group 10 and the second lens group 20. It can be understood that in other embodiments, a suitable aperture such as a variable aperture or a fixed aperture may be provided between the first lens group 10 and the second lens group 20 according to actual needs, which is not limited herein.

The first lens group 10 includes a first lens 11 and a second lens 12 in sequence from the object side to the image side. The second lens group 20 includes a third lens 21, a fourth lens 22, a fifth lens 23, and a sixth lens 24 in sequence from the object side to the image side. It can be understood that the imaging lens 100 has a total of six lenses, and the aperture 30 is provided between the second lens 12 of the first lens group 10 and the third lens 21 of the second lens group 20.

On the optical axis 80, an air gap exists between adjacent lenses among the first lens 11, the second lens 12, the third lens 21, the fourth lens 22, the fifth lens 23, and the sixth lens 24, that is, the first lens 11, the second lens 12, the third lens 21, the fourth lens 22, the fifth lens 23, and the sixth lens 24 may be six single non-bonded lenses. A process for bonding lenses is more complicated than that for non-bonding lenses and especially the bonding surfaces of the two lenses need to have a high-precision curved surface to achieve a high degree of tightness when bonding the two lenses. Further, during the bonding process, shifting defects are more likely to happen due to position deviation to affect the overall optical imaging quality of the imaging lens. Therefore, the imaging lens 100 of the present disclosure adopts a configuration of six single non-bonded lenses, which can effectively avoid problems caused by bonded lenses.

The first lens 11 has a negative refractive power. An object side (which can be understood as the side close to the object to be photographed, the left side shown in the figure) surface of the first lens 11 is convex and an image side (which can be understood as a side close to the image plane used to image the object to be photographed, the right side in the figure) surface of the first lens 11 is a concave surface, which can effectively correct peripheral aberrations off-axis.

The second lens 12 has a positive refractive power. An object-side surface of the second lens 12 is convex and an image-side surface is concave or convex. In this embodiment, the object-side surface of the second lens 12 is convex and the image-side surface of the second lens 12 is concave, which can effectively correct the aberration generated by the first lens. Of course, in other embodiments, the object-side surface of the second lens 12 may be convex and the image-side surface of the second lens 12 may be convex. The configuration of the second lens 12 can be adjusted according to actual needs, and the present disclosure does not limit this.

The third lens 21 has a negative refractive power, and an object-side surface of the third lens 21 is concave and an image-side surface of the third lens 21 is concave.

The fourth lens 22 has a positive refractive power. An object-side surface of the fourth lens 22 is concave and an image-side surface of the fourth lens 22 is convex. The configuration of the fourth lens and the third lens helps to further correct aberrations.

The fifth lens 23 has a positive refractive power. An object-side surface of the fifth lens 23 is concave and an image-side surface of the fifth lens 23 is convex. Each of the object-side surface and the image-side surface of the fifth lens 23 have at least one inflection point 90. As shown in FIG. 1, the object-side surface of the fifth lens 23 is provided with three inflection points 90, including an inflection point 90 that changes from convex to concave, an inflection point 90 that changes from concave to convex, an inflection point 90 that changes from convex to concave, which are disposed in sequence from top to bottom. That is, the object-side surface of the fifth lens 23 can be understood as a wave shape formed by turning a concave surface into a convex surface and then into a concave surface. In this way, a refraction angle of the surrounding light can be prevented from being too large, and the generation of coma may be avoided. Also, miniaturization of the imaging lens to the greatest extent may be facilitated.

In this embodiment, each of the object-side surface and the image-side surface of the fifth lens 23 has three inflection points 90. In other embodiments, a number of the infection points 90 disposed at the object-side surface and the image-side surface of the fifth lens 23 can be adjusted according to actual needs. The present disclosure has no limit on this.

The sixth lens 24 has a negative refractive power. An object-side surface of the sixth lens 24 is convex and an image-side surface of the sixth lens 24 is concave. Each of the object-side surface and the image-side surface of the sixth lens 24 has at least one inflection point 90.

In this embodiment, each of the object side and the image side of the sixth lens 24 is provided with three inflection points. Of course, in other embodiments, a number of the infection points 90 disposed at the object-side surface and the image-side surface of the sixth lens 24 can be adjusted according to actual needs. The present disclosure has no limit on this.

An effective focal length of the imaging lens 100 is f, and a distance from the object-side surface of the first lens to the image plane of the imaging lens on the optical axis is a total track length (TTL). An entrance pupil diameter of the imaging lens is EPD. The imaging lens satisfies the following conditions: 0.56<f/TTL<0.67, and f/EPD≤2.0.

It can be seen from the above technical solutions that in the imaging lens 100 of the present disclosure, through the cooperation between the lenses, at least one inflection point 90 is provided on each of the object-side surfaces and the image-side surfaces of the fifth lens 23 and the sixth lens 24. Correspondingly, the residual between the fifth and the sixth lens may be reduced and the total track length may be shortened, to facilitate the miniaturization of the imaging lens. Further, ghost images may be suppressed effectively, thereby meeting the needs of miniaturization and large apertures of the lens.

In another embodiment, the imaging lens 100 may further include a protective plate 50 which is disposed between the sixth lens 24 and the image plane 40 of the imaging lens 100, to protect the lens. Optionally, the protective plate 50 may include a piece of glass and a filter.

In one embodiment, a radius of curvature of the object-side surface of the first lens 11 may be R11, and a radius of curvature of the image-side surface of the first lens 11 may be R12. The imaging lens 100 may satisfy the following conditions: 0.09<|(R11-R12)/(R11+R12)|<0.1.

In this embodiment, the imaging lens 100 may satisfy the above conditions. Correspondingly, the distortion ability of the imaging lens 100 may be effectively eliminated, and at the same time the optical system of the imaging lens 100 may be enabled to have a better flat field curvature ability.

In one embodiment, a radius of curvature of the object-side surface of the second lens 12 is R21 and a radius of curvature of the image-side surface of the second lens 12 is R22. The imaging lens 100 may satisfy the following conditions: |R22 |>21, and 0.7<|(R21-R22)/(R21+R22)|<1.2.

If the radius of curvature of the image-side surface of the second lens 12 is too small, a reflection phenomenon of total reflection may occur. Therefore, the imaging lens 100 of the present embodiment satisfies the above conditions to effectively suppress the problem of stray light caused by a large angle.

In one embodiment, a focal length of the third lens 21 may be f3, and the imaging lens 100 may satisfy the following condition: -0.984<f3/f<-0.784. The imaging lens 100 of the present disclosure may satisfy the above-mentioned conditions and can be more beneficial to be matched with other lenses. For example, in this embodiment, the light in the first lens group 10 may be transmitted to the second lens group 20 by transition.

In one embodiment, the material of each lens may be plastic or glass. When the lens material is glass, the degree of freedom in refractive power configuration can be increased. When the lens is made of plastic, the production cost can be effectively reduced. Also, the surface of the lens can be configured as an aspheric surface (ASP). The aspheric surface can be easily made into a shape other than a spherical surface to obtain more control variables to reduce aberrations, thereby reducing the number of lenses required. Correspondingly, the total track length of the imaging lens may be reduced effectively to achieve miniaturization.

In one embodiment, the fourth lens 22 may be a glass aspheric surface lens and the refractive index of the fourth lens 22 may be ND. The imaging lens 100 may satisfy the following condition: ND≥1.80. The imaging lens 100 of the present disclosure may satisfy the above conditions, and can effectively improve off-axis aberrations, and at the same time may be beneficial to correct the lens exit angle, to better match the photosensitive element.

In one embodiment, a first air gap may be formed between the fifth lens 23 and the sixth lens 24. The thickness of the first air gap on the optical axis 80 may be T56. The central thickness of the fifth lens 23 on the optical axis 80 may be CT5, and the central thickness of the sixth lens 24 on the optical axis 80 may be CT6. The imaging lens 100 may satisfy the following conditions: 0.6≤T56/CTS≤1.2, and 0.6 ≤T56/CT6≤1.0.

The imaging lens 100 of the present disclosure may satisfy the above conditions, and can effectively improve the specular reflection between the fifth lens 23 and the sixth lens 24, and effectively suppress ghost images. It may also facilitate the miniaturization of the lens.

In one embodiment, the aperture 30 may be located between the second lens 12 and the third lens 21. A second air gap may be formed between the image-side surface of the second lens 12 and the object-side surface of the aperture 30, and a third air gap may be formed between the object-side surface of the third lens 21 and the image-side surface of the aperture 30. The thickness of the second air space on the optical axis 80 is T2s, the thickness of the third air space on the optical axis 80 is T3s, the focal length of the first lens group 10 is fsL1, and the focal length of the second lens group 20 is fsL2. The imaging lens 100 may satisfy the following conditions: 0.4<fsL1/fsL2<0.5, such that T2s>0.65 and T3s>1.0.

In one embodiment, a distance between the center vertex of the object-side surface of the first lens 11 and the center vertex of the image-side surface of the second lens 12 on the optical axis 80 is SL1, and a distance between the center vertex of the object-side surface of the third lens 21 and the center vertex of the image-side surface of the sixth lens 24 on the optical axis 80 is SL2. The imaging lens 100 may satisfy the following conditions: 0.1<SL1/TTL<0.15, and 0.4<SL2/TTL<0.6.

The imaging lens 100 of the present disclosure may satisfy the above-mentioned conditions, and may facilitate miniaturization of the lens, and at the same time, may be advantageous for maintaining a large aperture under the premise of a large viewing angle.

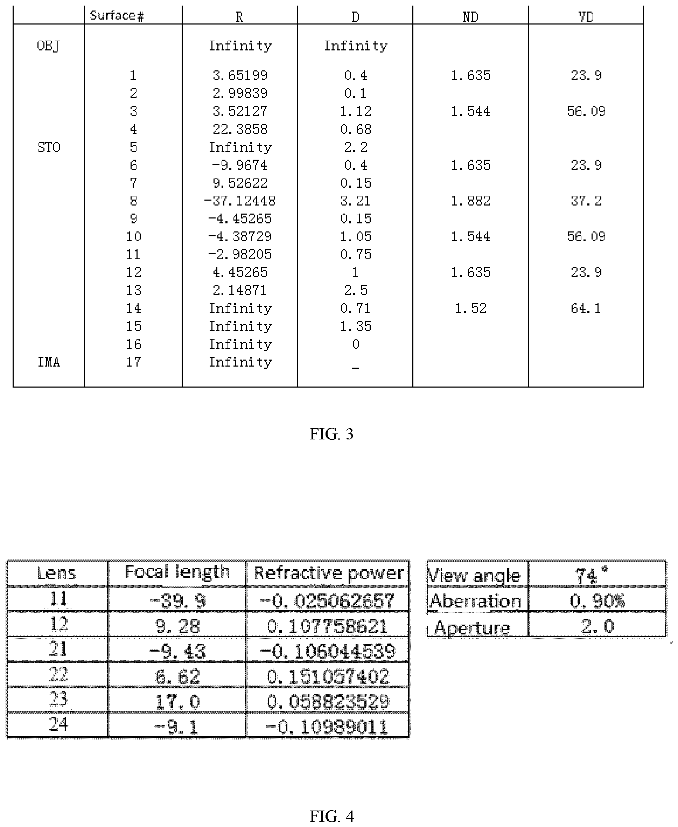

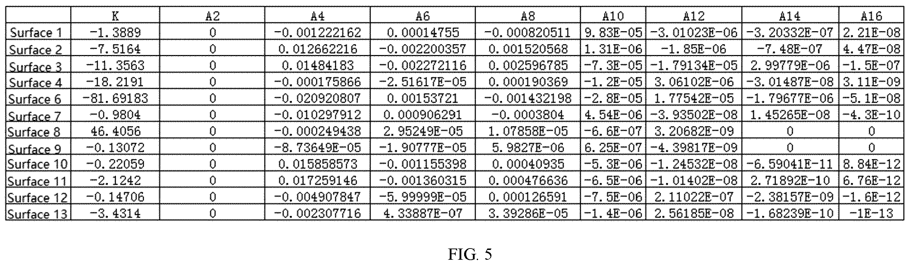

Refer now to FIG. 3 to FIG. 5. FIG. 3 shows parameter data of various surface of the imaging lens 100 of the present disclosure, and surfaces 1 to 17 denote surfaces from the object side to the image side in sequence. FIG. 4 shows focal lengths and capacity distributions of various lenses of the imaging lens 100. The table on the right in FIG. 4 shows the main optical performance parameters of the imaging lens 100 of the present disclosure, including viewing angle, optical distortion, and aperture value. FIG. 5 shows aspheric data of the imaging lens 100 of the present disclosure. A2 to A16 represent the second to 16th order aspheric coefficients of each surface.

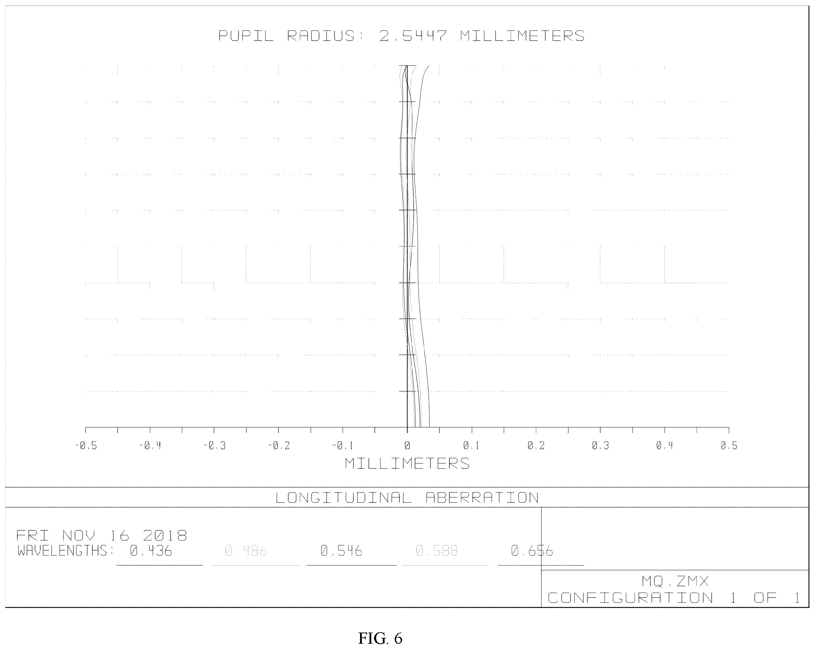

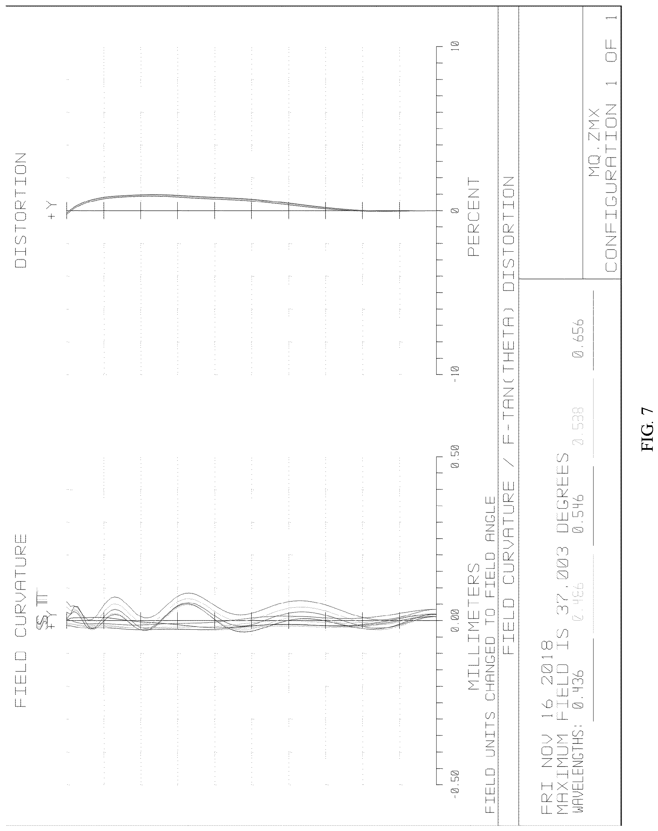

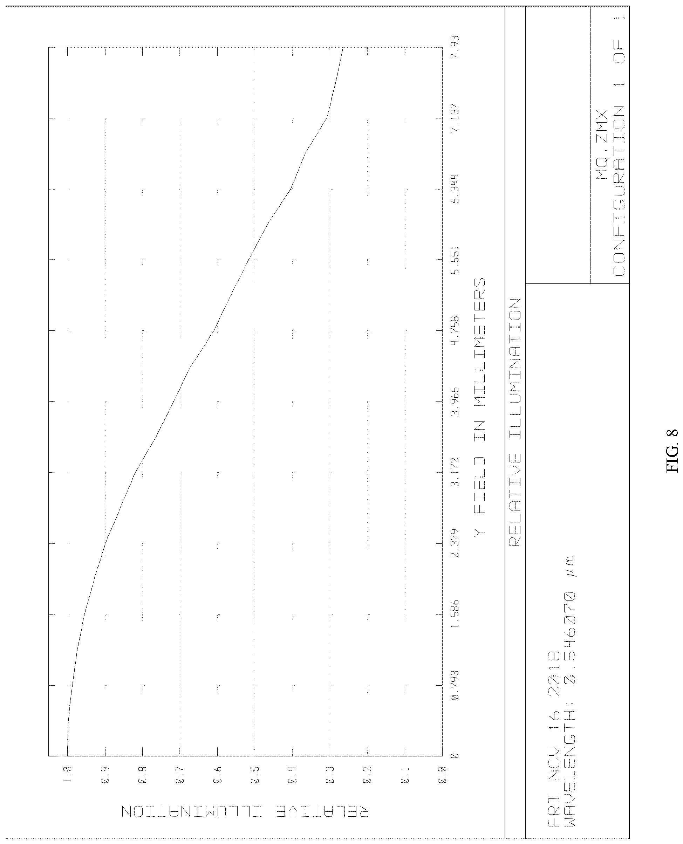

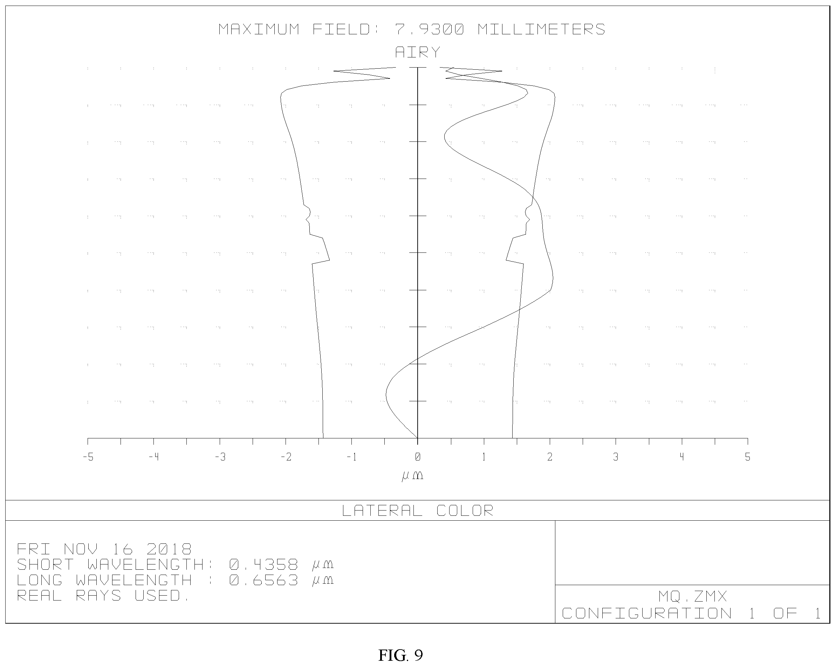

With reference to FIG. 6 to FIG. 9, it can be seen that the imaging lens of the present disclosure has small positional chromatic aberration, small distortion, high relative contrast, and small magnification chromatic aberration. Therefore, the imaging lens provided by the embodiments of the present disclosure can be applied to a moving focusing optical system as required, and has the characteristics of excellent aberration correction and good imaging quality. The imaging lens provided by the embodiments of the present disclosure can also be applied to three-dimensional (3D) image capture, digital cameras, mobile devices, tablet computers, smart TVs, network monitoring equipment, driving recorders, reversing development devices, body sensing game devices, or wearable devices.

The present disclosure also provides an imaging apparatus. The imaging apparatus may include an imaging lens and an electronic photosensitive element. The electronic photosensitive may be disposed at an image plane of the imaging lens. The above description of the various embodiments of the imaging lens can also be applied to the imaging apparatus of the present disclosure. In the present disclosure, the imaging apparatus may adopt the imaging lens provided by the embodiments of the present disclosure, and can be applied to a moving focusing optical system as required, and has the characteristics of excellent aberration correction and good imaging quality. The imaging lens provided by the embodiments of the present disclosure can also be applied to three-dimensional (3D) image capture, digital cameras, mobile devices, tablet computers, smart TVs, network monitoring equipment, driving recorders, reversing development devices, body sensing game devices, or wearable devices.

The present disclosure also provides an electronic device. The electronic device may include a device body and an imaging apparatus disposed at the device body. The imaging apparatus may include an imaging lens and an electronic photosensitive element. The electronic photosensitive may be disposed at an image plane of the imaging lens. The above description of the various embodiments of the imaging lens can also be applied to the imaging apparatus of the present disclosure. In the present disclosure, the electronic device may adopt the imaging lens provided by the embodiments of the present disclosure, and may be three-dimensional (3D) image capture device, digital cameras, mobile devices, tablet computers, smart TVs, network monitoring equipment, driving recorders, reversing development devices, body sensing game devices, or wearable devices.

It should be noted that in this specification, relational terms such as first and second are only used to distinguish one entity or operation from another entity or operation, and do not necessarily require or imply that actual relationship or order exists between these entities or operations. The terms "include," "comprise," or any other variants thereof are intended to cover non-exclusive inclusion, so that a process, method, article or device including a series of elements not only includes those elements, but also includes other elements not explicitly listed, or also includes elements inherent to such processes, methods, articles, or devices. If there are no further restrictions, an element associated with the phrase "including a ..." does not exclude the existence of other same elements in the process, method, article, or equipment including the element.

The above is a detailed introduction to the gimbal handle provided by the embodiments of the present disclosure and the gimbal with the same. In this disclosure, specific examples are used to explain the principles and implementation of the present disclosure. For those skilled in the art, according to the idea of the present disclosure, there will be changes in the specific implementation and the scope of application. In summary, the content of this specification should not be understood as a limitation to the present disclosure.

## Claims

1. An imaging lens, comprising a first lens group and a second lens group in sequence from an object side to an image side, wherein:
an aperture is provided between the first lens group and the second lens group;
the first lens group includes a first lens and a second lens in sequence from the object side to the image side;
the second lens group includes a third lens, a fourth lens, a fifth lens, and a sixth lens in sequence from the object side to the image side;
an object-side surface of the fifth lens is concave and an image-side surface of the fifth lens is convex;
each of the object-side surface and the image-side surface of the fifth lens has at least one inflection point;
an object-side surface of the sixth lens is convex and an image-side surface of the sixth lens is concave;
each of the object-side surface and the image-side surface of the sixth lens has at least one inflection point;
an effective focal length of the imaging lens is f, a distance from an object-side surface of the first lens to an image plane of the imaging lens on an optical axis is a total track length (TTL), an entrance pupil diameter of the imaging lens is EPD;
the imaging lens satisfies 0.56<f/TTL<0.67, and f/EPD≤2.0.

2. The imaging lens according to claim 1, wherein a radius of curvature of the object-side surface of the first lens is R11, a radius of curvature of an image-side surface of the first lens is R12, the imaging lens satisfies 0.09<|(R11-R12)/(R11+R12)|<0.1.

3. The imaging lens according to claim 1, wherein a radius of curvature of an object-side surface of the second lens is R21, a radius of curvature of an image-side surface of the second lens is R22, the imaging lens satisfies |R22|>21, and 0.7<|(R21-R22)/(R21+R22)|<1.2.

4. The imaging lens according to claim 1, wherein the third lens has a negative refractive power, a focal length of the third lens is f3, the imaging lens satisfies -0.984<f3/f<-0.784.

5. The imaging lens according to claim 1, wherein the fourth lens is a glass aspheric surface lens, a refractive index of the fourth lens is ND, the imaging lens satisfies ND≥1.80.

6. The imaging lens according to claim 1, wherein:
a first air gap is formed between the fifth lens and the sixth lens;
a thickness of the first air gap on the optical axis is T56;
a center thickness of the fifth lens on the optical axis is CT5;
a center thickness of the sixth lens on the optical axis is CT6;
the imaging lens satisfies 0.6≤T56/CTS≤1.2, and 0.6≤T56/CT6≤1.0.

7. The imaging lens according to claim 1, wherein:
the aperture is located between the second lens and the third lens;
a second air gap is formed between the image-side surface of the second lens and an object-side surface of the aperture;
a third air gap is formed between an object-side surface of the third lens and an image-side surface of the aperture;
a thickness of the second air gap on the optical axis is T2s;
a thickness of the third air gap on the optical axis is T3s;
a focal length of the first lens group is fsL1;
a focal length of the second lens group is fsL2;
the imaging lens satisfies 0.4<fsL1/fsL2<0.5, so that T2s>0.65 and T3s>1.0.

8. The imaging lens according to claim 1, wherein:
a distance between a center vertex of the object-side surface of the first lens and a center vertex of the image-side surface of the second lens on the optical axis is SL1;
a distance between a center vertex of the object-side surface of the third lens and a center of the image-side surface of the sixth lens on the optical axis is SL2;
the imaging lens satisfies 0.1<SL1/TTL<0.15, and 0.4<SL2/TTL<0.6.

9. The imaging lens according to claim 1, wherein the first lens has negative refractive power.

10. The imaging lens according to claim 1, wherein the second lens has positive refractive power.

11. The imaging lens according to claim 1, wherein the fourth lens has positive refractive power.

12. The imaging lens according to claim 1, wherein the fifth lens has positive refractive power.

13. The imaging lens according to claim 1, wherein the sixth lens has negative refractive power.

14. The imaging lens according to claim 1, wherein the object-side surface of the first lens is convex and an image-side surface of the first lens is concave.

15. The imaging lens according to claim 1, wherein an object-side surface of the second lens is convex, and an image-side surface of the second lens is convex or concave.

16. The imaging lens according to claim 1, wherein an object-side surface of the third lens is concave and an image-side surface of the third lens is concave.

17. The imaging lens according to claim 1, wherein an object-side surface of the fourth lens is concave and an image-side surface of the fourth lens is convex.

18. The imaging lens according to claim 1, further comprising a protective plate between the sixth lens and the image plane of the imaging lens.

19. The imaging lens according to claim 1, wherein the protective plate includes a piece of glass and a filter.

20. The imaging lens according to claim 1, wherein the aperture is a variable aperture.

21. An imaging apparatus, comprising an imaging lens and an electronic photosensitive element, wherein:
the electronic photosensitive element is disposed at an image plane of the imaging lens;
the imaging lens includes a first lens group and a second lens group in sequence from an object side to an image side;
an aperture is provided between the first lens group and the second lens group;
the first lens group includes a first lens and a second lens in sequence from the object side to the image side;
the second lens group includes a third lens, a fourth lens, a fifth lens, and a sixth lens in sequence from the object side to the image side;
an object-side surface of the fifth lens is concave and an image-side surface of the fifth lens is convex;
each of the object-side surface and the image-side surface of the fifth lens has at least one inflection point;
an object-side surface of the sixth lens is convex and an image-side surface of the sixth lens is concave;
each of the object-side surface and the image-side surface of the sixth lens has at least one inflection point;
an effective focal length of the imaging lens is f, a distance from an object-side surface of the first lens to the image plane of the imaging lens on an optical axis is a total track length (TTL), an entrance pupil diameter of the imaging lens is EPD;
the imaging lens satisfies 0.56<f/TTL<0.67, and f/EPD≤2.0.

22. The imaging apparatus according to claim 21, wherein a radius of curvature of an object-side surface of the first lens is R11, a radius of curvature of the image-side surface of the first lens is R12, the imaging lens satisfies 0.09<|(R11-R12)/(R11+R12)|<0.1.

23. The imaging apparatus according to claim 21, wherein a radius of curvature of an object-side surface of the second lens is R21, a radius of curvature of an image-side surface of the second lens is R22, the imaging lens satisfies |R22|>21, and 0.7<|(R21-R22)/(R21+R22)|<1.2.

24. The imaging apparatus according to claim 21, wherein the third lens has a negative refractive power, a focal length of the third lens is f3, the imaging lens satisfies -0.984<f3/f<-0.784.

25. The imaging apparatus according to claim 21, wherein: the fourth lens is a glass aspheric surface lens, a refractive index of the fourth lens is ND, the imaging lens satisfies ND≥1.80.

26. The imaging apparatus according to claim 21, wherein:
a first air gap is formed between the fifth lens and the sixth lens;
a thickness of the first air gap on the optical axis is T56;
a center thickness of the fifth lens on the optical axis is CT5;
a center thickness of the sixth lens on the optical axis is CT6;
the imaging lens satisfies 0.6≤T56/CTS≤1.2, and 0.6≤T56/CT6≤1.0.

27. The imaging apparatus according to claim 21, wherein:
the aperture is located between the second lens and the third lens;
a second air gap is formed between the image-side surface of the second lens and an object-side surface of the aperture;
a third air gap is formed between an object-side surface of the third lens and an image-side surface of the aperture;
a thickness of the second air gap on the optical axis is T2s;
a thickness of the third air gap on the optical axis is T3s;
a focal length of the first lens group is fsL1;
a focal length of the second lens group is fsL2;
the imaging lens satisfies 0.4<fsL1/fsL2<0.5, so that T2s>0.65 and T3s>1.0.

28. The imaging apparatus according to claim 21, wherein:
a distance between a center vertex of the object-side surface of the first lens and a center vertex of the image-side surface of the second lens on the optical axis is SL1;
a distance between a center vertex of the object-side surface of the third lens and a center of the image-side surface of the sixth lens on the optical axis is SL2;
the imaging lens satisfies 0.1<SL1/TTL<0.15, and 0.4<SL2/TTL<0.6.

29. The imaging apparatus according to claim 21, wherein the first lens has negative refractive power.

30. The imaging apparatus according to claim 21, wherein the second lens has positive refractive power.

31. The imaging apparatus according to claim 21, wherein the fourth lens has positive refractive power.

32. The imaging apparatus according to claim 21, wherein the fifth lens has positive refractive power.

33. The imaging apparatus according to claim 21, wherein the sixth lens has negative refractive power.

34. The imaging apparatus according to claim 21, wherein the object-side surface of the first lens is convex and the image-side surface of the first lens is concave.

35. The imaging apparatus according to claim 21, wherein the object-side surface of the second lens is convex, and the image-side surface of the second lens is convex or concave.

36. The imaging apparatus according to claim 21, wherein the object-side surface of the third lens is concave and the image-side surface of the third lens is concave.

37. The imaging apparatus according to claim 21, wherein the object-side surface of the fourth lens is concave and the image-side surface of the fourth lens is convex.

38. The imaging apparatus according to claim 21, further comprising a protective plate between the sixth lens and the image plane of the imaging lens.

39. The imaging apparatus according to claim 21, wherein the protective plate includes a piece of glass and a filter.

40. The imaging apparatus according to claim 21, wherein the aperture is a variable aperture.

41. An electronic device, comprising a device body and an imaging apparatus provided at the device body, wherein:
the imaging apparatus includes an imaging lens and an electronic photosensitive element;
the electronic photosensitive element is disposed at an image plane of the imaging lens;
the imaging lens includes a first lens group and a second lens group in sequence from an object side to an image side;
an aperture is provided between the first lens group and the second lens group;
the first lens group includes a first lens and a second lens in sequence from the object side to the image side;
the second lens group includes a third lens, a fourth lens, a fifth lens, and a sixth lens in sequence from the object side to the image side;
an object-side surface of the fifth lens is concave and an image-side surface of the fifth lens is convex;
each of the object-side surface and the image-side surface of the fifth lens has at least one inflection point;
an object-side surface of the sixth lens is convex and an image-side surface of the sixth lens is concave;
each of the object-side surface and the image-side surface of the sixth lens has at least one inflection point;
an effective focal length of the imaging lens is f, a distance from an object-side surface of the first lens to the image plane of the imaging lens on an optical axis is a total track length (TTL), an entrance pupil diameter of the imaging lens is EPD;
the imaging lens satisfies 0.56<f/TTL<0.67, and f/EPD≤2.0.

42. The electronic device according to claim 41, wherein a radius of curvature of an object-side surface of the first lens is R11, a radius of curvature of the image-side surface of the first lens is R12, the imaging lens satisfies 0.09<|(R11-R12)/(R11+R12)|<0.1.

43. The electronic device according to claim 41, wherein a radius of curvature of an object-side surface of the second lens is R21, a radius of curvature of an image-side surface of the second lens is R22, the imaging lens satisfies |R22|>21, and 0.7<|(R21-R22)/(R21+R22)|<1.2.

44. The electronic device according to claim 41, wherein the third lens has a negative refractive power, a focal length of the third lens is f3, the imaging lens satisfies -0.984<f3/f<-0.784.

45. The electronic device according to claim 41, wherein: the fourth lens is a glass aspheric surface lens, a refractive index of the fourth lens is ND, the imaging lens satisfies ND≥1.80.

46. The electronic device according to claim 41, wherein:
a first air gap is formed between the fifth lens and the sixth lens;
a thickness of the first air gap on the optical axis is T56;
a center thickness of the fifth lens on the optical axis is CT5;
a center thickness of the sixth lens on the optical axis is CT6;
the imaging lens satisfies 0.6≤T56/CTS≤1.2, and 0.6≤T56/CT6≤1.0.

47. The electronic device according to claim 41, wherein:
the aperture is located between the second lens and the third lens;
a second air gap is formed between the image-side surface of the second lens and an object-side surface of the aperture;
a third air gap is formed between an object-side surface of the third lens and an image-side surface of the aperture;
a thickness of the second air gap on the optical axis is T2s;
a thickness of the third air gap on the optical axis is T3s;
a focal length of the first lens group is fsL1;
a focal length of the second lens group is fsL2;
the imaging lens satisfies 0.4<fsL1/fsL2<0.5, so that T2s>0.65 and T3s>1.0.

48. The electronic device according to claim 41, wherein:
a distance between a center vertex of the object-side surface of the first lens and a center vertex of the image-side surface of the second lens on the optical axis is SL1;
a distance between a center vertex of the object-side surface of the third lens and a center of the image-side surface of the sixth lens on the optical axis is SL2;
the imaging lens satisfies 0.1<SL1/TTL<0.15, and 0.4<SL2/TTL<0.6.

49. The electronic device according to claim 41, wherein the first lens has negative refractive power.

50. The electronic device according to claim 41, wherein the second lens has positive refractive power.

51. The electronic device according to claim 41, wherein the fourth lens has positive refractive power.

52. The electronic device according to claim 41, wherein the fifth lens has positive refractive power.

53. The electronic device according to claim 41, wherein the sixth lens has negative refractive power.

54. The electronic device according to claim 41, wherein the object-side surface of the first lens is convex and the image-side surface of the first lens is concave.

55. The electronic device according to claim 41, wherein the object-side surface of the second lens is convex, and the image-side surface of the second lens is convex or concave.

56. The electronic device according to claim 41, wherein the object-side surface of the third lens is concave and the image-side surface of the third lens is concave.

57. The electronic device according to claim 41, wherein the object-side surface of the fourth lens is concave and the image-side surface of the fourth lens is convex.

58. The electronic device according to claim 41, further comprising a protective plate between the sixth lens and the image plane of the imaging lens.

59. The electronic device according to claim 41, wherein the protective plate includes a piece of glass and a filter.

60. The electronic device according to claim 41, wherein the aperture is a variable aperture.
